# EUROPEAN PATENT SPECIFICATION

(11) **EP 3 573 306 B1**
(45) Date of publication and mention of the grant of the patent: **02.04.2025**
(21) Application number: 18742195.3
(22) Date of filing: 19.01.2018
(51) Int. Cl.: H04L 69/18, H04L 69/40, H04L 69/22, H04L 69/24

(54) **DATA PROCESSING METHOD AND DEVICE UTILIZED IN CLIENT TERMINAL**
IN EINEM CLIENT-ENDGERÄT GENUTZTES DATENVERARBEITUNGSVERFAHREN UND -VORRICHTUNG
PROCÉDÉ ET DISPOSITIF DE TRAITEMENT DE DONNÉES UTILISÉS DANS UN TERMINAL CLIENT

(30) Priority: 19.01.2017 CN 201710038068
(43) Date of publication of application: 27.11.2019
(73) Proprietor: Shenzhen Skyworth-RGB Electronic Co., Ltd., Guangdong 518052 (CN)
(72) Inventor: LI, Qiwen, Shenzhen Guangdong 518052 (CN)
(74) Representative: Monteiro Alves, Inês
(86) International application number: PCT/CN2018/073350
(87) International publication number: WO 2018/133828

(56) References cited:
- CN-A- 1 867 152
- CN-A- 101 064 712
- CN-A- 107 070 872
- US-A1- 2007 005 335
- US-A1- 2009 276 480
- US-A1- 2009 319 691
- US-A1- 2014 119 199

## Description

### TECHNICAL FIELD

The present disclosure relates to the field of communication technologies, for example, a data processing method and apparatus for a client.

### BACKGROUND

An application (APP) is a computer program running on an operating system and developed to perform one or more specific tasks. An application running on a client may interact with a user and has a visual user interface.

In a data processing mode between a server and an application on a client, the client performs a corresponding operation for received data according to the fixed configuration mode of the server. Such processing mode has the following disadvantages:
1. Once the client fails to perform this operation or an exception occurs while the client is performing this operation, the client does not do anything or report an error. The user experience is poor.
2. In the case of consistent configuration on the server, if the client version faces severe fragmentation, it is likely that some clients cannot normally process the configuration on the server. The compatibility is poor and the scalability is not good.
3. The server cannot fully configure the processing of the application. When the data processing mode is changed due to the update of the application, sometimes the problem can be solved merely after the client is upgraded. This is not conducive to the sustainable development of software, US20090276480A1 introduces about a method for message send version management in a distributed computing environment including a plurality of nodes. US20070005335A1 introduces about a method for establishing backward compatibility and forward compatibility of protocols used for communication between subsystems of an electronic trading system having different software versions.

### SUMMARY

The present disclosure provides a data processing method and apparatus for a client. The client processes protocol data according to a set protocol so that the client intelligently processes the protocol data.

The invention is set out in the appended set of claims.

### BRIEF DESCRIPTION OF DRAWINGS

FIG. 1A is a flowchart of a data processing method for a client according to an embodiment;
FIG 1B is a structure diagram of a set protocol according to an embodiment;
FIG 2 is a flowchart of a data processing method for a client according to an embodiment;
FIG 3A is a structure diagram of a data processing apparatus for a client according to an embodiment;
FIG. 3B is a structure diagram of a protocol data processing module 340 of FIG 3A according to an embodiment; and
FIG. 4 is a structure diagram of hardware of a terminal according to an embodiment.

### DETAILED DESCRIPTION

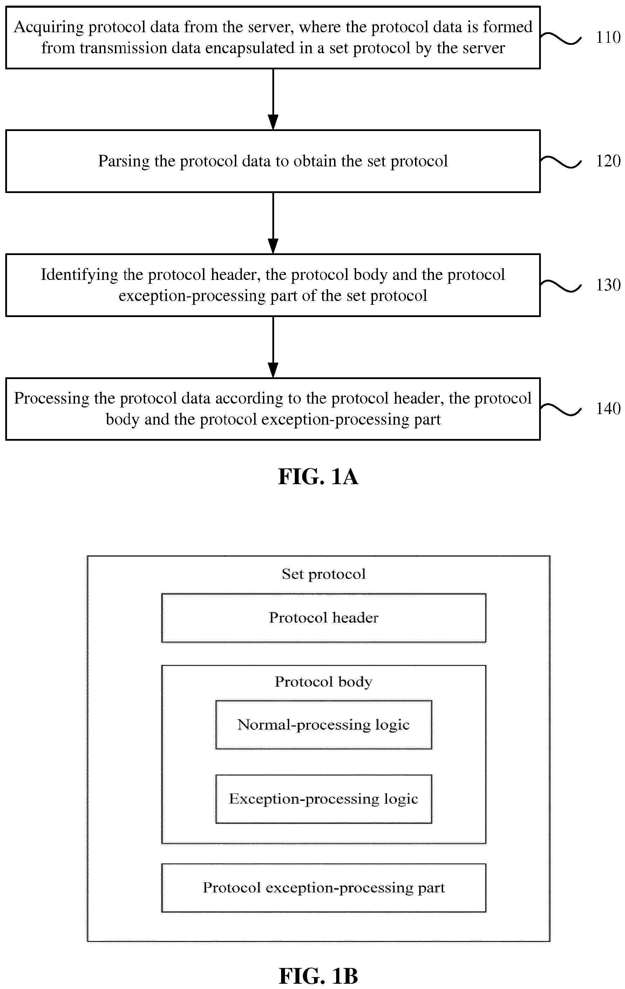

Referring to FIGS. 1A and FIG 1B, FIG. 1A is a flowchart of a data processing method for a client according to this embodiment; FIG 1B is a structure diagram of a set protocol according to this embodiment. The method in this embodiment is applicable to a scenario where the client processes data acquired from a server and may be performed by the client. The client may be disposed in a terminal. The terminal includes, but is not limited to, a television set, a personal computer, a mobile phone, a personal digital assistant (PDA), and the like.

As shown in FIG. 1A, the data processing method for a client provided in this embodiment may include the steps described below.

In step 110, protocol data is acquired from the server, where the protocol data is formed by encapsulating transmission data in a set protocol by the server.

For example, the client is a program that corresponds to the server and provides a local service to a user. The client is communicatively connected to the server. In this embodiment, the server and the client predetermine the set protocol for a specified application, and the server formulates the application on the client according to the set protocol. Before service data is transmitted to the client, the service data to be transmitted is encapsulated in the set protocol to form the protocol data. The client acquires the protocol data from the server.

As shown in FIG. 1B, the set protocol agreed between the client and the server includes a protocol header, a protocol body and a protocol exception-processing part. The protocol header may include version information for identifying the set protocol and client information applicable to the set protocol. The protocol body may include two parts: normal-processing logic and exception-processing logic. The client processes the application according to the content of the protocol body. The normal-processing logic refers to protocol content in which the client can normally process the application according to the content included in the normal-processing logic. The exception-processing logic refers to protocol content in which the client processes the application according to the content included in the exception-processing logic when the client cannot process the application according to the normal-processing logic and the set protocol is applicable to the current client. The content of the exception-processing logic is different from the content of the normal-processing logic. The protocol exception-processing part refers to protocol content executed by the client in response to determining that the set protocol is not applicable to the current client on the basis of the protocol header. Furthermore, when the client to which the set protocol is applicable cannot process the application according to the content of the protocol body, the client may also process the application according to the content of the protocol exception-processing part.

The client may process the application by executing the protocol data. For example, the client processes the application by executing the service data in the protocol data according to the processing logic provided by the protocol body. The service data may include service data instructing operations like opening the application, updating the application or deleting the application.

In step 120, the protocol data is parsed to obtain the set protocol.

For example, parsing the protocol data is decapsulating the protocol data. The decapsulating is an inverse process of the data encapsulation in step 110. The client parses the acquired protocol data to obtain the set protocol part of the protocol data and the encapsulated service data part. When the protocol data is decapsulated, the protocol data can be parsed into three different containers: a protocol header container, a protocol body container and a protocol exception container.

In step 130, the protocol header, the protocol body and the protocol exception-processing part of the set protocol are identified.

For example, the protocol header, the protocol body and the protocol exception-processing part of the set protocol are identified on the basis of the content obtained from the three different containers at the time of parsing the protocol data. As shown in FIG. 1B, the protocol body may include normal-processing logic and exception-processing logic. The client executes the application and processes the protocol data according to the normal-processing logic, and executes the application and processes the protocol data according to the exception-processing logic. When the client fails to process the protocol data by executing the application according to the exception-processing logic, the client executes the application and processes the protocol data according to the protocol exception-processing part.

For example, the protocol body and the protocol exception-processing part may be independent of each other in the set protocol. When the client processes the application according to the content of the protocol body, the client does not need to parse the content of the exception-processing part, thereby reducing processing time and resource occupation. The protocol body and the protocol exception-processing part may also be combined. That is, the protocol body may also include the protocol exception-processing part, so that the client can also read the content of the protocol exception-processing part when executing the protocol body.

In step 140, the protocol data is processed according to the protocol header, the protocol body and the protocol exception-processing part.

For example, the client determines, according to the identification information in the protocol header, whether the set protocol is applicable to the current client, and the client chooses to process the protocol data according to the content of the protocol body obtained from parsing or to process the protocol data according to the content of the protocol exception-processing part obtained from parsing.

In this embodiment, a unified set protocol is agreed between the server and the client; when the server transmits data to the client, the data to be transmitted is first encapsulated in the set protocol to form protocol data and then transmitted; and after acquiring the protocol data, the client parses the protocol data, identifies the protocol header, the protocol body and the protocol exception-processing part of the set protocol, and executes the application and processes the protocol data according to the protocol header, the protocol body and the protocol exception-processing part. This enables the client to execute the application and intelligently process the protocol data, avoids the problem where the client cannot normally execute the application or process the protocol data due to data incompatibility or the like during subsequent expansion and update, and is beneficial to the sustainable development of software between the server and the client.

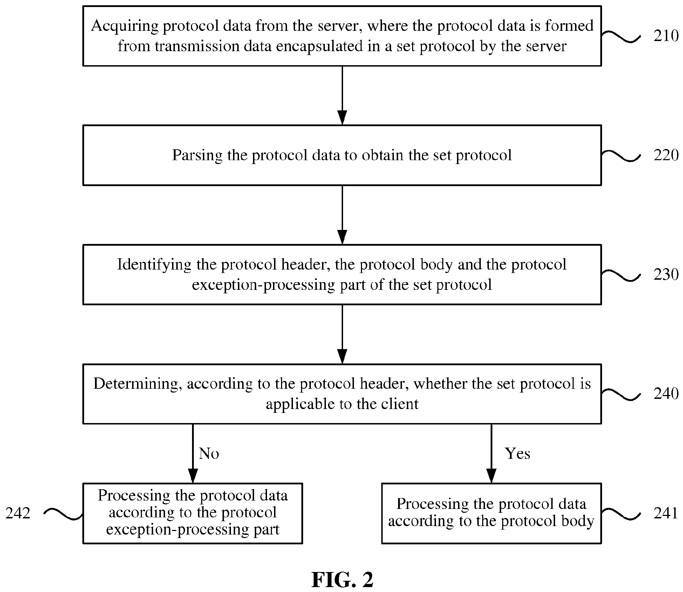

Referring to FIG. 2, FIG. 2 is a flowchart of a data processing method for a client according to an embodiment. As shown in FIG 2, the data processing method for a client provided in this embodiment may include the steps described below.

In step 210, protocol data is acquired from the server, where the protocol data is formed by encapsulating transmission data in a set protocol by the server.

In step 220, the protocol data is parsed to obtain the set protocol.

In step 230, the protocol header, the protocol body and the protocol exception-processing part of the set protocol are identified.

In step 240, whether the set protocol is applicable to the client is determined according to the protocol header.

For example, the protocol header may include version information of the set protocol and client information applicable to the set protocol. The current client determines whether the set protocol is applicable to the current client and whether the version of the set protocol is applicable to the current client according to the content of the protocol header. In condition that the set protocol and the version of the set protocol are determined to be applicable to the current client, step 241 is performed; otherwise, step 242 is performed.

In step 241, the protocol data is processed according to the protocol body.

In step 242, the protocol data is processed according to the protocol exception-processing part.

Optionally, in step 241, when the client executes the application and processes the protocol data according to the content of the protocol body, the client executes the application and processes the protocol data according to normal-processing logic in the protocol body, and in condition that the processing fails, the client executes the application and processes the protocol data according to exception-processing logic in the protocol body.

Optionally, when the client fails to execute the application and process the protocol data according to the exception-processing logic in the protocol body, the client jumps to step 242 to process the protocol data according to the protocol exception-processing part.

For example, in condition that the set protocol is applicable to the current client, the client processes the application according to the normal-processing logic, and in condition that the processing can be normally implemented, the client continues processing the application according to the normal-processing logic until the processing is completed; in condition that the client cannot process the application according to the normal-processing logic or an exception occurs when the client processes the application according to the normal-processing logic, the client processes the application according to the exception-processing logic, and in condition that the processing can be smoothly implemented, the client continues processing the application according to the exception-processing logic until the processing is completed; in condition that the client cannot process the application according to the exception-processing logic or an exception occurs when the client processes the application according to the exception-processing logic, the client processes the application according to the protocol exception-processing part until the processing is completed.

In this embodiment, a unified set protocol is agreed between the server and the client; when the server transmits data to the client, the data to be transmitted is first encapsulated in the set protocol to form protocol data and then transmitted; and after acquiring the protocol data, the client parses the protocol data, identifies the protocol header, the protocol body and the protocol exception-processing part of the set protocol, determines whether the set protocol is applicable to the client, executes the application and performs the protocol data according to the protocol body if the set protocol is applicable to the client, and executes the application and performs the protocol data according to the protocol exception-processing part if the set protocol is not applicable to the client. This enables the client to execute the application and intelligently process the protocol data, avoids the problem where the client cannot normally execute the application or process the protocol data due to data incompatibility or the like during subsequent expansion and update, and is beneficial to the sustainable development of software between the server and the client.

This embodiment further provides a data processing apparatus for a client. The data processing apparatus and the data processing methods provided in the preceding embodiments are guided by the same inventive concept. For what is not detailed in the apparatus embodiment, see the preceding method embodiments.

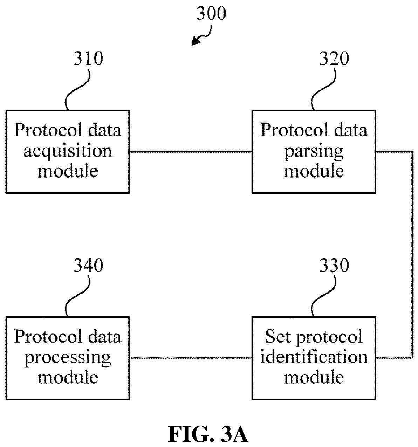

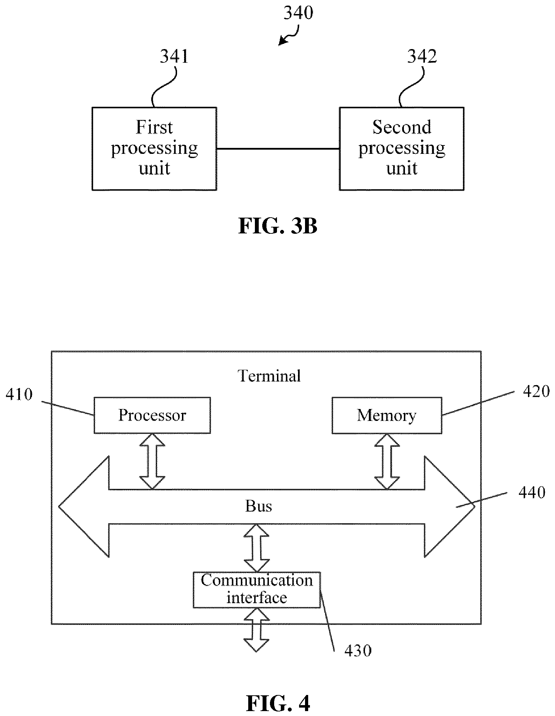

Referring to FIGS. 3A and 3B, FIG. 3A is a structure diagram of a data processing apparatus for a client according to an embodiment and FIG. 3B is a structure diagram of a protocol data processing module 340 of FIG. 3A according to an embodiment.

The data processing apparatus 300 for a client provided in this embodiment may include:
a protocol data acquisition module 310, which is configured to acquire protocol data from a server, where the protocol data is formed by encapsulating transmission data in a set protocol by the server.
a protocol data parsing module 320, which is configured to parse the protocol data to obtain the set protocol.
a set protocol identification module 330, which is configured to identify a protocol header, a protocol body and a protocol exception-processing part of the set protocol; and
a protocol data processing module 340, which is configured to process the protocol data according to the protocol header, the protocol body and the protocol exception-processing part.

Optionally, the protocol body includes normal-processing logic and exception-processing logic.

Optionally, as shown in FIG. 3B, the protocol data processing module 340 may include:
a first processing unit 341, which is configured to process the protocol data according to the protocol body in response to determining that that the set protocol is applicable to the client according to the protocol header; and
a second processing unit 342, which is configured to process the protocol data according to the protocol exception-processing part in response to determining that the set protocol is not applicable to the client according to the protocol header.

Optionally, the second processing unit 342 is further configured to:
process the protocol data according to the normal-processing logic, and in condition that the processing fails, process the protocol data according to the exception-processing logic.

Optionally, the second processing unit 342 is further configured to:
process the protocol data according to the exception-processing logic, and in condition that the processing fails, process the protocol data according to the protocol exception-processing part.

In this embodiment, a unified set protocol is agreed between the server and the client; when the server transmits data to the client, the data to be transmitted is first encapsulated in the set protocol to form protocol data and then transmitted; and after acquiring the protocol data, the client parses the protocol data, identifies the protocol header, the protocol body and the protocol exception-processing part of the set protocol, and executes the application and processes the protocol data according to the protocol header, the protocol body and the protocol exception-processing part. This enables the client to execute the application and intelligently process the protocol data, avoids the problem where the client cannot normally execute the application or process the protocol data due to data incompatibility or the like during subsequent expansion and update, and is beneficial to the sustainable development of software between the server and the client.

This embodiment further provides a computer-readable storage medium storing computer-executable instructions for performing any of the methods described above.

FIG. 4 is a structure diagram of hardware of a terminal according to an embodiment. As shown in FIG. 4, the terminal includes a processor 410 and a memory 420, and may further include a communication interface 430 and a bus 440.

The processor 410, the memory 420 and the communication interface 430 may communicate with each other through the bus 440. The communication interface 430 may be used for information transmission. The processor 410 may call logic instructions in the memory 420 to perform any of the methods in the preceding embodiments.

The memory 420 may include a program storage region and a data storage region, where the program storage region may store an operating system and an application program required by at least one function while the data storage region may store data created depending on use of a terminal device. Furthermore, the memory may include, for example, a volatile memory of a random access memory, and may further include a non-volatile memory, such as at least one disk memory, a flash memory or other non-transient solid-state memories.

In addition, the logic instructions in the memory 420 may be implemented in the form of a software function unit and, when sold or used as an independent product, may be stored in a computer-readable storage medium. The solution of the present invention may be embodied in the form of a software product that is stored in a storage medium and includes several instructions for enabling a computer device (which may be a personal computer, server, or network device, etc.) to perform all or part of the steps of the method provided in this embodiment.

The storage medium may be a non-transient storage medium or a transient storage medium. The non-transient storage medium may include: a U disk, a mobile hard disk, a read only memory (ROM), a random access memory (RAM), a magnetic disk, an optical disk or other media that can store program codes.

All or part of the procedure steps in the methods of the preceding embodiments may be implemented by related hardware instructed by one or more computer programs. These programs may be stored in a non-transient computer-readable storage medium. During the execution of these programs, the steps in the preceding method embodiments may be implemented.

### INDUSTRIAL APPLICABILITY

The data processing method and apparatus provided in the present disclosure enable the client to execute the application and intelligently process the protocol data according to the set protocol, avoid the problem where the client cannot normally execute the application due to data incompatibility or the like during subsequent expansion and update, and are beneficial to the sustainable development of software between the server and the client.

## Claims

1. A data processing method for a client, comprising:
acquiring (110) protocol data from a server, wherein the protocol data is formed by encapsulating transmission data in a set protocol by the server;
parsing (120) the protocol data to obtain the set protocol;
identifying (130) a protocol header, a protocol body and a protocol exception-processing part of the set protocol; and
processing (140) the protocol data according to the protocol header, the protocol body and the protocol exception-processing part;
**characterized in that**,
wherein the processing comprises:
determining, according to the protocol header, whether the set protocol is applicable to the client;
processing the protocol data according to the protocol body in response to determining that the set protocol is applicable to the client according to the protocol header and not processing the protocol exception-processing part; and
processing the protocol data according to the protocol exception-processing part in response to determining that the set protocol is inapplicable to the client according to the protocol header and not processing the protocol body.

2. The method of claim 1, wherein the protocol body comprises normal-processing logic and exception-processing logic.

3. A data processing apparatus for a client, comprising:
a protocol data acquisition module (310), which is configured to acquire protocol data from a server, wherein the protocol data is formed by encapsulating transmission data in a set protocol by the server;
a protocol data parsing module (320), which is configured to parse the protocol data to obtain the set protocol;
a set protocol identification module (330), which is configured to identify a protocol header, a protocol body and a protocol exception-processing part of the set protocol; and
a protocol data processing module (340), which is configured to process the protocol data according to the protocol header, the protocol body and the protocol exception-processing part;
**characterized in that**,
wherein the protocol data processing module comprises:
a determining unit, which is configured to determine, according to the protocol header, whether the set protocol is applicable to the client;
a first processing unit (341), which is configured to process the protocol data according to the protocol body in response to determining that that the set protocol is applicable to the client according to the protocol header and not to process the protocol exception-processing part; and
a second processing unit (342), which is configured to process the protocol data according to the protocol exception-processing part in response to determining that the set protocol is inapplicable to the client according to the protocol header and not to process the protocol body.

4. The apparatus of claim 3, wherein the protocol body comprises normal-processing logic and exception-processing logic.

5. A computer-readable storage medium, which is configured to store computer-executable instructions for executing the method of any one of claims 1 and 2.

## Patentansprüche

1. Datenverarbeitungsverfahren für einen Client, **dadurch gekennzeichnet, dass** es Folgendes umfasst:
Erfassen (110) von Protokolldaten von einem Server, wobei die Protokolldaten durch Einkapseln von Übertragungsdaten in ein festgelegtes Protokoll durch den Server gebildet werden;
Analysieren (120) der Protokolldaten, um das festgelegte Protokoll zu erhalten;
Identifizieren (130) eines Protokollkopfes, eines Protokollkörpers und eines Protokollausnahmeverarbeitungsteils des festgelegten Protokolls; Und
Verarbeiten (140) der Protokolldaten gemäß dem Protokollkopf, dem Protokollkörper und dem Protokollausnahmeverarbeitungsteil;
**dadurch gekennzeichnet, dass**
das Verarbeiten Folgendes umfasst:
Bestimmung anhand des Protokollkopfes, ob das festgelegte Protokoll auf den Client anwendbar ist,
Verarbeitung der Protokolldaten gemäß dem Protokollkörper als Reaktion auf die Bestimmung, dass das festgelegte Protokoll anhand des Protokollkopfes auf den Client anwendbar ist, und Nichtverarbeitung des Protokollausnahmeverarbeitungsteils; Und
Verarbeitung der Protokolldaten gemäß dem Protokollausnahmeverarbeitungsteils als Reaktion auf die Bestimmung, dass das festgelegte Protokoll anhand des Protokollkopfes nicht auf den Client anwendbar ist, und Nichtverarbeitung des Protokollkörpers; Und

2. Verfahren nach Anspruch 1, wobei der Protokollkörper Normalverarbeitungslogik und Ausnahmeverarbeitungslogik umfasst.

3. Datenverarbeitungsvorrichtung für einen Client, umfassend:
ein Protokolldatenerfassungsmodul (310), das so konfiguriert ist, dass es die Protokolldaten von einem Server erfasst, wobei die Protokolldaten durch Einkapseln von Übertragungsdaten in ein festgelegtes Protokoll durch den Server gebildet werden;
ein Protokolldaten-Analysierungsmodul (320), das so konfiguriert ist, dass es die Protokolldaten Analysiert, um das festgelegte Protokoll zu erhalten;
ein Identifikationsmodul (330) des festgelegten Protokolls, das so konfiguriert ist, dass es einen Protokollkopf, einen Protokollkörper und einen Protokollausnahmeverarbeitungsteil des Satzprotokolls identifiziert; und
ein Protokolldatenverarbeitungsmodul (340), das so konfiguriert ist, dass es die Protokolldaten gemäß dem Protokollkopf, dem Protokollkörper und dem Protokollausnahmeverarbeitungsteil verarbeitet;
**dadurch gekennzeichnet, dass**
das Protokolldatenverarbeitungsmodul umfasst:
eine Bestimmungseinheit, die so konfiguriert ist, dass sie anhand des Protokollkopfes bestimmt, ob das festgelegte Protokoll auf den Client anwendbar ist;
eine erste Verarbeitungseinheit (341), die so konfiguriert ist, dass sie die Protokolldaten gemäß dem Protokollkörper als Reaktion auf die Bestimmung, dass das festgelegte Protokoll anhands des Protokollkopfs auf den Client anwendbar ist, verarbeitet und den Protokollausnahme-Verarbeitungsteil nicht verarbeitet; und
eine zweite Verarbeitungseinheit (342), die so konfiguriert ist, dass sie die Protokolldaten gemäß dem Protokollausnahmeverarbeitungsteil als Reaktion auf die Bestimmung, dass das festgelegte Protokoll anhands des Protokollkopfs auf den Client nicht anwendbar ist, verarbeitet und den Protokollkörper nicht verarbeitet.

4. Vorrichtung nach Anspruch 3, wobei der Protokollkörper Normalverarbeitungslogik und Ausnahmeverarbeitungslogik umfasst.

5. Computerlesbares Speichermedium, das zum Speichern computerausführbarer Anweisungen zum Ausführen des Verfahrens nach einem der Ansprüche 1 und 2 konfiguriert ist.

## Revendications

1. Procédé de traitement de données pour un client, **caractérisé en ce qu'**il comprend :
acquérir (110) des données de protocole depuis un serveur, dans lequel les données de protocole sont formées en encapsulant des données de transmission dans un protocole défini par le serveur;
analyser (120) les données de protocole pour obtenir le protocole défini ;
identifier (130) un en-tête de protocole, un corps de protocole et une partie de traitement exceptionnel de protocole du protocole défini ; et
traiter (140) les données de protocole en fonction de l'en-tête de protocole, de corps de protocole et de la partie de traitement exceptionnel de protocole ;
**caractérisé en ce que**,
dans lequel le traitement comprend :
déterminer, en fonction de l'en-tête de protocole, si le protocole défini est applicable au client,
traiter les données de protocole en fonction du corps de protocole en réponse à une détermination que le protocole défini est applicable au client en fonction de l'en-tête de protocole et non traiter la partie de traitement exceptionnel de protocole ; et
traiter les données de protocole en fonction de la partie de traitement exceptionnel de protocole en réponse à une détermination que le protocole défini est inapplicable au client en fonction de l'en-tête de protocole et non traiter le corps de protocole.

2. Procédé selon la revendication 1, dans lequel le corps de protocole comprend une logique de traitement normal et une logique de traitement exceptionnel.

3. Dispositif de traitement de données pour un client, comprenant :
un module d'acquisition de données de protocole (310), qui est configuré pour acquérir des données de protocole depuis un serveur, dans lequel les données de protocole sont formées en encapsulant des données de transmission dans un protocole défini par le serveur ;
un module d'analyse de données de protocole (320), qui est configuré pour analyser les données de protocole pour obtenir le protocole défini ;
un module d'identification de protocole défini (330), qui est configuré pour identifier un en-tête de protocole, un corps de protocole et une partie de traitement exceptionnel de protocole du protocole défini ; et
un module de traitement de données de protocole (340), qui est configuré pour traiter les données de protocole en fonction de l'en-tête de protocole, de corps de protocole et de la partie de traitement exceptionnel de protocole ;
**caractérisé en ce que**,
dans lequel le module de traitement de données de protocole comprend :
une unité de détermination, qui est configurée pour déterminer, en fonction de l'en-tête de protocole, si le protocole défini est applicable au client ;
une première unité de traitement (341), qui est configurée pour traiter les données de protocole en fonction du corps de protocole en réponse à une détermination que le protocole défini est applicable au client en fonction de l'en-tête de protocole et non traiter la partie de traitement exceptionnel de protocole ; et
une seconde unité de traitement (342), qui est configurée pour traiter les données de protocole en fonction de la partie de traitement exceptionnel de protocole en réponse à une détermination que le protocole défini est inapplicable au client en fonction de l'en-tête de protocole et non traiter le corps de protocole.

4. Dispositif selon la revendication 3, dans lequel le corps de protocole comprend une logique de traitement normal et une logique de traitement exceptionnel.

5. Support de stockage lisible par ordinateur, qui est configuré pour stocker des instructions exécutables par ordinateur pour exécuter le procédé selon l'une quelconque des revendications 1 et 2.
